# EUROPEAN PATENT APPLICATION

(11) **EP 2 538 612 A1**
(43) Date of publication of application: **26.12.2012**
(21) Application number: 10860853.0
(22) Date of filing: 13.12.2010
(51) Int. Cl.: H04L 12/24

(54) **METHOD AND DEVICE FOR MANAGING SERVICE**

(71) Applicant: Huawei Technologies Co. Ltd., Longgang District Shenzhen Guangdong 518129 (CN)
(72) Inventor: WANG, Peng, Shenzhen Guangdong 518129 (CN); HUANG, Zhe, Shenzhen Guangdong 518129 (CN); SU, Xianqun, Shenzhen Guangdong 518129 (CN); JIANG, Rong, Shenzhen Guangdong 518129 (CN); NIE, Jiteng, Shenzhen Guangdong 518129 (CN)
(74) Representative: Barth, Stephan Manuel
(86) International application number: PCT/CN2010/079709
(87) International publication number: WO 2012/079212

(57) **Abstract**

In the field of communications, a method and a device for service management are provided. The method includes: receiving a management instruction corresponding to a virtual linkage group, where the virtual linkage group is grouped according to a service requirement; determining an object of the virtual linkage group, where the object of the virtual linkage group is a group of processes, a group of components, a group of boards, or a group of frames satisfying the service requirement; and performing unified management on the object of the virtual linkage group according to the management instruction. The device includes: a receiving module, a first determining module, and a management module. By grouping a virtual linkage group according to a service requirement, using a group of processes, a group of components, a group of boards, or a group of frames satisfying the service requirement as an object of the virtual linkage group, and taking the virtual linkage group as a unit to perform service management when a management instruction corresponding to the virtual linkage group is received, effective service management is performed on the basis of satisfying the service requirement, and the flexibility of the service management is improved.

## Description

### FIELD OF THE INVENTION

The present invention relates to the field of communications, and in particular, to a method and a device for service management.

### BACKGROUND OF THE INVENTION

Nowadays, with the development of multi-process and multi-thread technologies, more and more services are emerging. The effective management of various services, in particular the management of a faulty service, is gradually becoming a focus of attention.

In the prior art, when service management is performed, for the service management of a conventional high-end router, after an active-board service is faulty, a standby-board service rapidly continues to operate so that an outward service is uninterrupted. For a high reliability system based on the active-standby service protection, when a service of a process is faulty, only the faulty process is switched, and the operation of other processes is not affected. For a truncked system that is developed by the industry, when an active frame service is faulty, a cross-frame service protection is carried out.

In the implementation of the present invention, the inventors find that the prior art at least has the following disadvantages.

While taking a board as a unit to perform service management, the prior art is incapable of providing a precise fault isolation domain, and services that do not have an interactive relationship may usually have a fault linkage because they are deployed on the same physical board, that is, a local fault may affect the global function of a system. While taking a process as a unit to perform service management, the prior art is incapable of processing several related processes, thereby affecting the global NSR (None Stop Forwarding, none stop forwarding) performance and upgrade performance of a system, and even affecting the upgrade ISSU (In-Service Software Upgrade, in-service software upgrade) granularity under a condition that an upgrade interface is incompatible. When a frame is taken as a unit to perform service management, the service deployment may be limited by a physical frame range and likewise a problem that the fault isolation is not precise arises. Therefore, the method for service management in the prior art is incapable of satisfying a service requirement, lacks effectiveness, and does not have high flexibility in service management.

### SUMMARY OF THE INVENTION

To perform effective service management on the basis of satisfying a service requirement and improve flexibility of service management, embodiments of the present invention provide a method and a device for service management. The technical solutions are as follows.

In one aspect, a method for service management is provided. The method includes:
receiving a management instruction corresponding to a virtual linkage group, where the virtual linkage group is grouped according to a service requirement;
determining an object of the virtual linkage group, where the object of the virtual linkage group is a group of processes, a group of components, a group of boards, or a group of frames satisfying the service requirement; and
performing unified management on the object of the virtual linkage group according to the management instruction.

In another aspect, a device for service management is provided. The device includes:
a receiving module, configured to receive a management instruction corresponding to a virtual linkage group, where the virtual linkage group is grouped according to a service requirement;
a first determining module, configured to determine an object of the virtual linkage group, where the object of the virtual linkage group is a group of processes, a group of components, a group of boards, or a group of frames satisfying the service requirement; and
a management module, configured to perform, according to the management instruction received by the receiving module, unified management on the object of the virtual linkage group determined by the first determining module.

The technical solutions of the embodiments of the present invention have the following beneficial effects:

By grouping a virtual linkage group according to a service requirement, using a group of processes, a group of components, a group of boards, or a group of frames satisfying the service requirement as an object of the virtual linkage group, and taking the virtual linkage group as a unit to perform service management when a management instruction corresponding to the virtual linkage group is received, effective service management is performed on the basis of satisfying the service requirement, and the flexibility of the service management is improved.

### BRIEF DESCRIPTION OF THE DRAWINGS

To illustrate the technical solutions according to the embodiments of the present invention more clearly, the accompanying drawings for describing the embodiments are introduced briefly in the following. Apparently, the accompanying drawings in the following description are only some embodiments of the present invention, and persons skilled in the art can derive other drawings from the accompanying drawings without creative efforts.

FIG. 1 is a flowchart of a method for service management provided by Embodiment 1 of the present invention;

FIG. 2 is a schematic diagram of a first virtual linkage group provided by Embodiment 2 of the present invention;

FIG. 3 is a schematic diagram of a second virtual linkage group provided by Embodiment 2 of the present invention;

FIG. 4 is a schematic diagram of a third virtual linkage group provided by Embodiment 2 of the present invention;

FIG. 5 is a flowchart of a method for service management provided by Embodiment 2 of the present invention;

FIG. 6 is a schematic diagram of a fourth virtual linkage group provided by Embodiment 2 of the present invention;

FIG. 7 is a flowchart of another method for service management provided by Embodiment 2 of the present invention;

FIG. 8 is a schematic structural diagram of a device for service management provided by Embodiment 3 of the present invention;

FIG. 9 is a schematic structural diagram of another device for service management provided by Embodiment 3 of the present invention; and

FIG. 10 is a schematic structural diagram of still another device for service management provided by Embodiment 3 of the present invention.

### DETAILED DESCRIPTION OF THE EMBODIMENTS

To make the objectives, technical solutions and advantages of the present invention more comprehensible, the present invention is described in further detail below with reference to the accompanying drawings.

### Embodiment 1

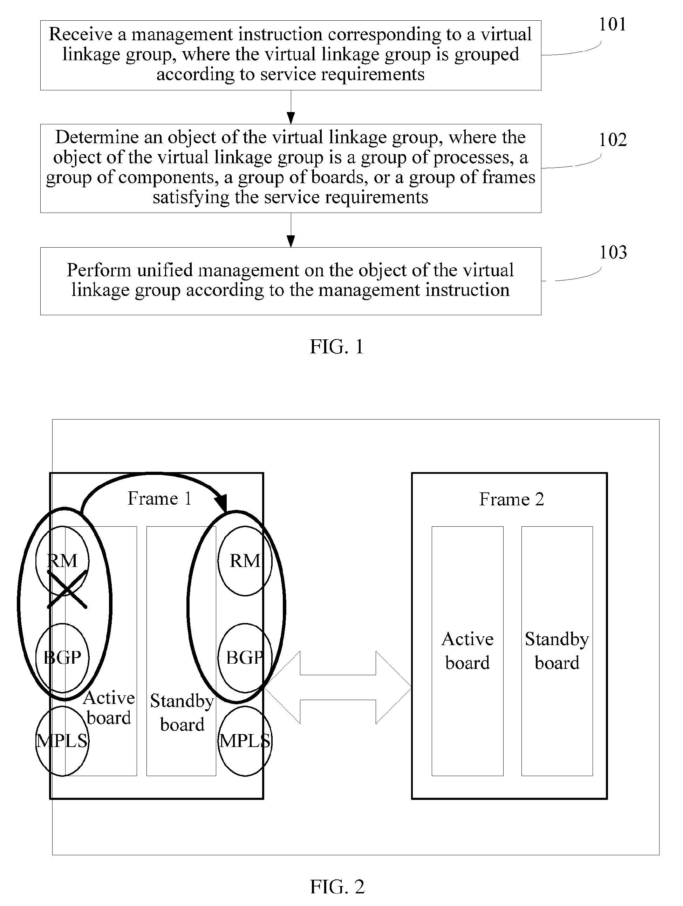

The embodiment provides a method for service management. Referring to FIG. 1, the method is specifically as follows:

Step 101: Receive a management instruction corresponding to a virtual linkage group, where the virtual linkage group is grouped according to a service requirement;

Step 102: Determine an object of the virtual linkage group, where the object of the virtual linkage group is a group of processes, a group of components, a group of boards, or a group of frames satisfying the service requirement;

Step 103: Perform unified management on the object of the virtual linkage group according to the management instruction.

Furthermore, before the receiving of the management instruction corresponding to the virtual linkage group, the method further includes:
establishing a virtual linkage group information table, where the virtual linkage group information table at least includes information of the object of the virtual linkage group; and

Accordingly, the determining of the object of the virtual linkage group includes:
querying the virtual linkage group information table for the information of the object of the virtual linkage group; and determining the object of the virtual linkage group according to a query result.

Furthermore, before the establishing of the virtual linkage group information table, the method further includes:
determining a linkage policy of the virtual linkage group, where the linkage policy at least includes a fault processing policy and an active-standby protection policy; and

Accordingly, the virtual linkage group information table further includes the linkage policy of the virtual linkage group.

Specifically, the performing of the unified management on the object of the virtual linkage group according to the management instruction includes:
querying the virtual linkage group information table for the information of the object of the virtual linkage group; and performing the unified management on the object of the virtual linkage group according to the management instruction and the queried linkage policy of the virtual linkage group.

The determining of the linkage policy of the virtual linkage group includes:
determining the linkage policy of the virtual linkage group according to a configuration of a user; or, when the user does not configure the linkage policy of the virtual linkage group, determining a default linkage policy as the linkage policy of the virtual linkage group.

In the method provided in this embodiment, by grouping a virtual linkage group according to a service requirement, using a group of processes, a group of components, a group of boards, or a group of frames satisfying the service requirement as an object of the virtual linkage group, and taking the virtual linkage group as a unit to perform service management when a management instruction corresponding to the virtual linkage group is received, effective service management is performed on the basis of satisfying the service requirement, and the flexibility of the service management is improved.

### Embodiment 2

The embodiment provides a method for service management. By using the method, service management is performed by taking the virtual linkage group as a unit on a basis of grouping a virtual linkage group according to a service requirement, so as to implement effective service management. This embodiment does not constrain grouping methods of the virtual linkage group. In actual applications, a virtual linkage group may be grouped statically or dynamically, or the virtual linkage group may be grouped in various terminal input ways such as a command line/MIB (Management Information Base, management information base)/Schema (an interface model of the Network Configuration Protocol). No matter the virtual linkage group is grouped in which way, it is only required that the grouping of the virtual linkage group satisfies the service requirement. In addition, the grouped virtual linkage group is not limited to processes or components within a board, the virtual linkage group may also be formed by combining any number of processes, components, boards, or frames by crossing boards or frames.

Refer to a schematic diagram of a virtual linkage group shown in FIG. 2. An RM (Routing Management, routing management) and a BGP (Border Gateway Protocol, border gateway protocol) are a route generation component and a route collecting component that are closely related. It is expected that the communication interaction of the two components is conducted within a board so as to reduce a communication overhead with a high capacity. In addition, it is also expected that factors such as faulty switching does not affect an MPLS (Multi-Protocol Label Switching, multi-protocol label switching) operation of the same board. Therefore, the two components of the BGP and the RM are grouped to a same virtual linkage group according to the service requirement.

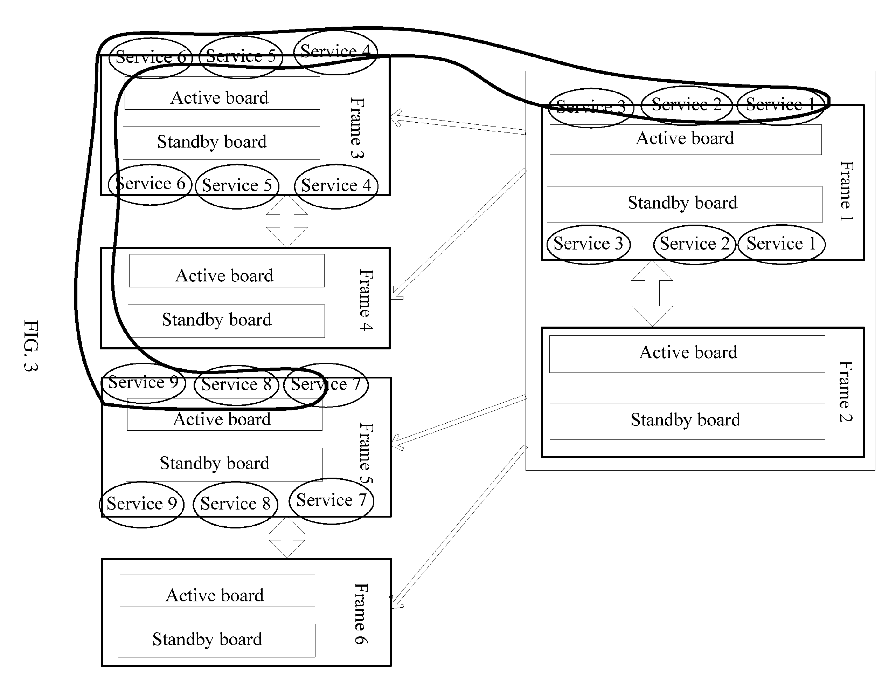

In addition, despite of the physical restriction, a group of processes crossing frames may be taken as a virtual linkage group for an independent management. Referring to FIG. 3, service 1, service 2, service 3, service 4, service 5, service 6, service 7, service 8, and service 9 are process groups with the same type, for example, the services are all on a routing protocol plane (or on a label protocol plane or a device management plane), and thereby may be grouped to one virtual linkage group so that unified management is performed on the service 1, service 2, service 3, service 4, service 5, service 6, service 7, service 8, and service 9 that correspond to an object of the virtual linkage group, such as unified upgrade and unified start, and therefore an upper layer service is greatly expanded.

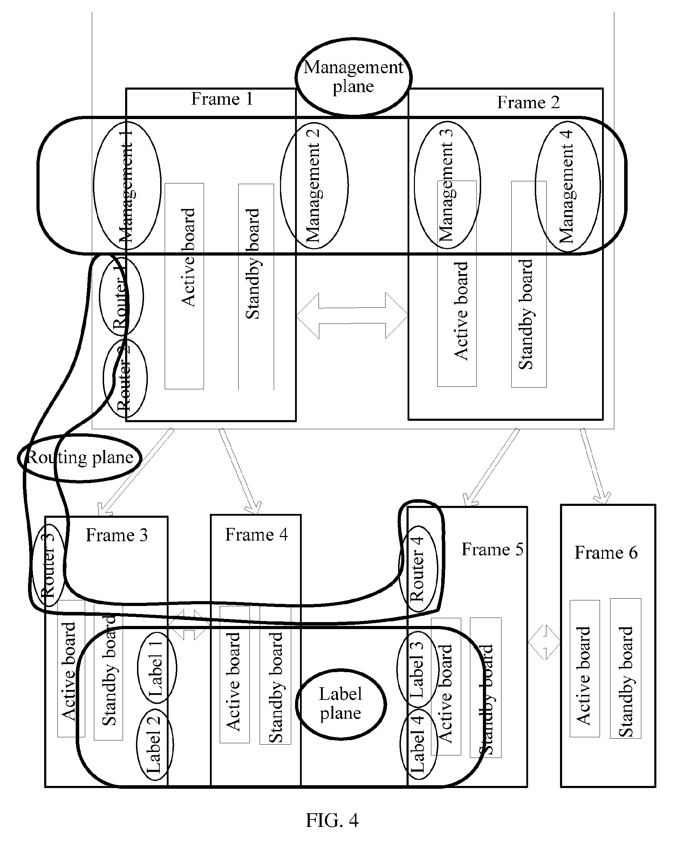

Furthermore, the virtual linkage group may also be grouped according to different types of the planes. Referring to FIG. 4, a management plane is exclusively in charge of system management, a routing plane is exclusively in charge of generation and release of routing information, and a label plane is exclusively in charge of generation and release of label information. During upgrade, any one of the three planes may be selected according to actual requirements of internal and external clients, for upgrade, where the upgrade of the planes is independently controlled and does not affect each other.

Definitely, in addition to the virtual linkage groups shown in FIG. 2 to FIG. 4, a virtual linkage group may also be grouped by using other methods. If a group of boards satisfying a service requirement is taken as an object of a virtual linkage group, the virtual linkage group may be referred to as an LR (Logical Router, logical router). If a group of processes/components satisfying requirements is taken as an object of a virtual linkage group, the virtual linkage group may be referred to as a VR (Virtual Router, virtual router) or a service plane. If a group of frames satisfying a service requirement is taken as an object of a virtual linkage group, the virtual linkage group is referred to as a local cluster (that is, a large truncked system may be grouped into several sub-clusters according to operator requirements). This is not limited in this embodiment. No matter how a virtual linkage group is grouped and which type of the virtual linkage group is to be grouped, the virtual linkage group may be taken as a whole so as to perform management on the object of the virtual linkage group.

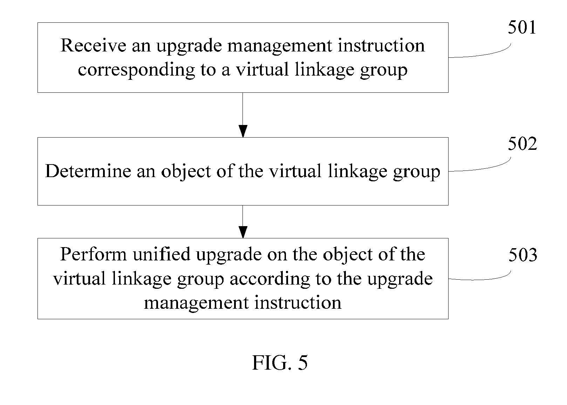

The management includes, but is not limited to, upgrade management, fault management, start management and switching management. This embodiment first takes the upgrade management on an object of a virtual linkage group for example to illustrate in detail the method for service management provided in this embodiment. Referring to FIG. 5, the method provided in this embodiment is specifically as follows:

Step 501: Receive an upgrade management instruction corresponding to a virtual linkage group;

The upgrade management instruction corresponding to the virtual linkage group may be delivered by an upper layer management apparatus. This is not limited in this embodiment.

Step 502: Determine an object of the virtual linkage group;

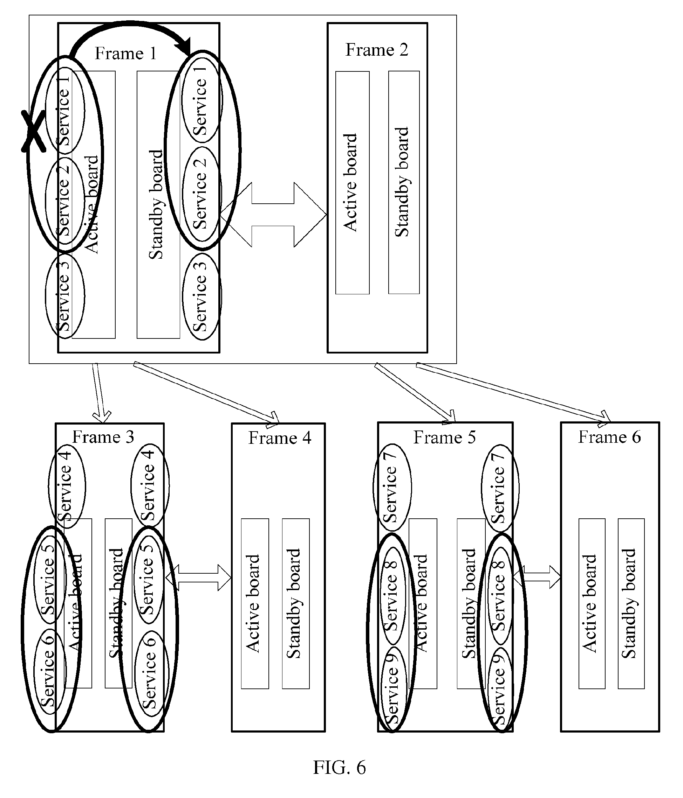

Specifically, each virtual linkage group corresponds to its respective object, and this embodiment does not constrain the method for determining an object of a virtual linkage group. In an actual application, after grouping a virtual linkage group, the method provided in this embodiment records information of an object of each virtual linkage group through establishing a virtual linkage group information table. For ease of description, a virtual linkage group shown in FIG. 6 is taken as an example. In FIG. 6, service 1 and service 2, service 5 and service 6, and service 8 and service 9 are three groups of processes having an association relationship, for example, all are processes in C/S (Client/Server, client/server) mode, and therefore the service 1 and the service 2 may be grouped to one virtual linkage group, which is recorded as a virtual linkage group 1; the service 5 and the service 6 may be grouped to one virtual linkage group, which is recorded as a virtual linkage group 2; and the service 8 and the service 9 may be grouped to one virtual linkage group, which is recorded as a virtual linkage group 3. In this case, content of a virtual linkage group information table for FIG. 6 is shown in the following.

**Table 1**

| Virtual Linkage Group | Object of the Virtual Linkage Group |
|---|---|
| 1 | service 1 and service 2 |
| 2 | service 5 and service 6 |
| 3 | service 8 and service 9 |

As regards the virtual linkage group shown in FIG. 6, this embodiment takes a received upgrade management instruction corresponding to the virtual linkage group 2 as an example, and it may be determined, by querying Table 1, that the object of the virtual linkage group 2 includes the service 5 and the service 6.

Step 503: Perform unified upgrade on the object of the virtual linkage group according to the upgrade management instruction.

As regards this step, after step 502 in which the object of the virtual linkage group is determined as the service 5 and the service 6, unified upgrade may be performed on the service 5 and the service 6 without affecting the service 1, the service 2, the service 8 and the service 9. This embodiment takes a virtual linkage group as a unit to perform upgrade management, the object of the virtual linkage group is a group of processes, and the group of processes corresponding to two services, namely, the service 5 and the service 6, so unified upgrade of the two services is implemented. By comparison with a scenario that the two services are upgraded independently, the method of upgrade management provided in this embodiment has high efficiency, and therefore is capable of performing effective service management. In addition, the more services that correspond to the object of a virtual linkage group are, the higher the efficiency is, and the more obvious the management effect is.

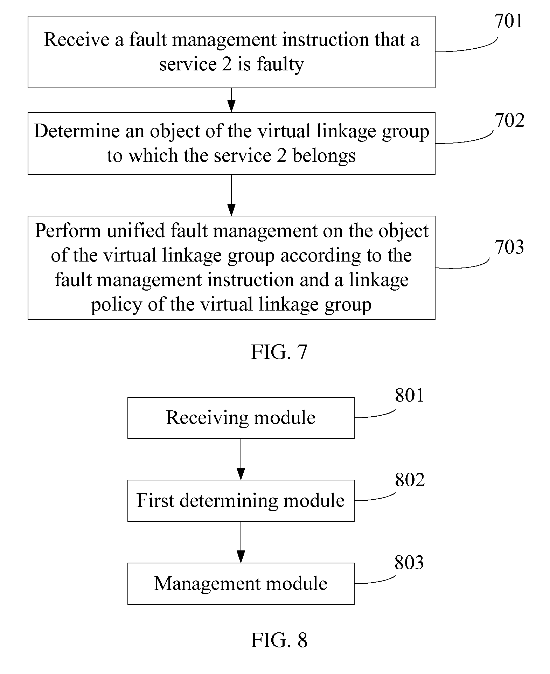

After the description of the method for upgrade management on a service, this embodiment takes fault management on a service as an example to further describe the method provided in this embodiment. For ease of description, the case that the service 2 in the virtual linkage group shown in FIG. 6 is detected to be faulty is taken as an example. Referring to FIG. 7, the method provided in this embodiment is specifically as follows:

Step 701: Receive a fault management instruction indicating that the service 2 is faulty;

For this step, while a service is managed, service fault detection at a lower layer may also be performed by using the method provided in this embodiment. When a fault is detected, that is, a fault management instruction corresponding to a virtual linkage group to which the faulty service belongs is to be received soon.

Step 702: Determine an object of the virtual linkage group to which the service 2 belongs;

Specifically, this embodiment, likewise, does not constrain how to determine the object of the virtual linkage group to which the service 2 belongs. In an actual application, after grouping a virtual linkage group, likewise, a virtual linkage group information table shown in Table 1 is established, and an object of the virtual linkage group is determined by querying the virtual linkage group information table.

Exemplarily, to further optimized the method for service management, before establishing the virtual linkage group information table, the method provided in this embodiment further includes a step of determining a linkage policy of the virtual linkage group. The linkage policy may be customized by a user according to requirements, which includes, but is not limited to, a fault processing policy and an active-standby protection policy. The fault processing policy includes, but is not limited to, fault restart, fault restart + switching, fault reported to a parent node and fault alarming. The active-standby protection policy includes, but is not limited to, switching of a current node, reporting to a parent node, restart and switching, and restart but not switching. This embodiment does not constrain the method for determining the linkage policy of the virtual linkage group. After grouping a virtual linkage group, if a user configures a linkage policy of the virtual linkage group, the linkage policy of the virtual linkage group is determined according to the configuration of the user; or, if the user does not configure a linkage policy of the virtual linkage group, the linkage policy of the virtual linkage group may be determined as a default linkage policy.

Likewise, this embodiment does not limit the default linkage policy either. For example, for fault management, the fault processing policy included in the linkage policy may be reporting to a parent node by default, and the active-standby protection policy may be restart and switching by default. In an actual application, according to a service requirement, different linkage policies or the same linkage policy may be configured for different virtual linkage groups. This is not limited in this embodiment.

To manage a service better in combination with a linkage policy and make it convenient to query for a linkage policy of a virtual linkage group in time during use, the established virtual linkage group information table further includes a determined linkage policy of the virtual linkage group in addition to information of an object of the virtual linkage group. For the virtual linkage group shown in FIG. 6, the virtual linkage group information table having a linkage policy is shown in Table 2 in the following.

**Table 2**

| Virtual Linkage Group | Object of The Virtual Linkage Group | Fault Processing Policy | active-Standby Protection Policy |
|---|---|---|---|
| 1 | service 1 and service 2 | reporting to a parent node | restart and switching |
| 2 | service 5 and service 6 | processing at a current node | restart but not switching |
| 3 | service 8 and service 9 | processing at a current node | restart and switching |

Step 703: Perform unified fault management on the object of the virtual linkage group according to the fault management instruction and the linkage policy of the virtual linkage group.

For this step, by querying the virtual linkage group information table, that is, querying Table 2, not only the object of the virtual linkage group may be determined, but also the linkage policy of the virtual linkage group may be determined. For the service 2 that is faulty, the object of the virtual linkage group 1 to which the service 2 belongs further includes service 1 in addition to the service 2. The fault processing policy of the virtual linkage group 1 is reporting to a parent node; and the active-standby protection policy is restart and switching. In this case, in this step, while performing, according to the fault management instruction and the linkage policy of the virtual linkage group, the fault management on the object of the virtual linkage group, in addition to reporting the fault of the service 2 to a parent node, it is also required to switch the virtual linkage group to a corresponding standby virtual linkage group after restart, as shown in FIG. 6.

In addition to implementing effective fault management and upgrade management, the method provided in this embodiment may also implement batch start and switching of services based on a virtual linkage group, that is, unified start and switching of the object of a virtual linkage group. The principles are similar to the above description and are not described in detail herein.

In the method provided in this embodiment, by grouping a virtual linkage group according to a service requirement, using a group of processes, a group of components, a group of boards, or a group of frames satisfying the service requirement as an object of the virtual linkage group, and taking the virtual linkage group as a unit to perform service management when a management instruction corresponding to the virtual linkage group is received, effective service management is performed on the basis of satisfying the service requirement, and the flexibility of the service management is improved.

### Embodiment 3

An embodiment provides a device for service management. Referring to FIG. 8, the device includes:
a receiving module 801, configured to receive a management instruction corresponding to a virtual linkage group, where the virtual linkage group is grouped according to a service requirement;
a first determining module 802, configured to determine an object of the virtual linkage group, where the object of the virtual linkage group is a group of processes, a group of components, a group of boards, or a group of frames satisfying the service requirement; and
a management module 803, configured to perform, according to the management instruction that is received by the receiving module 801, unified management on the object of the virtual linkage group that is determined by the first determining module 802.

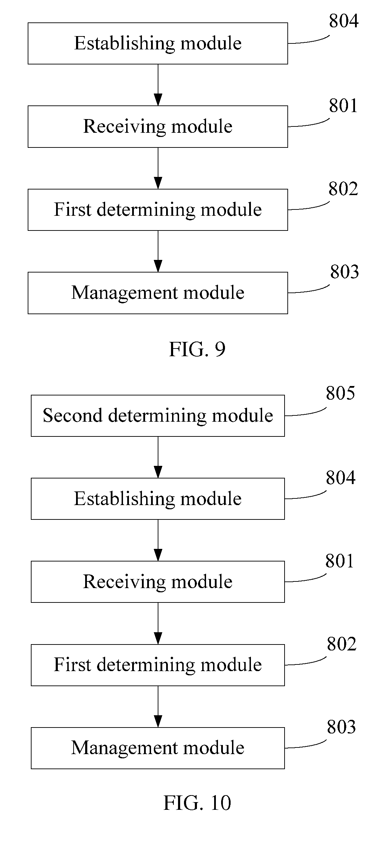

Referring to FIG. 9, the device further includes:
an establishing module 804, configured to establish a virtual linkage group information table before the receiving module 801 receives the management instruction corresponding to the virtual linkage group, where the virtual linkage group information table at least includes information of the object of the virtual linkage group.

Accordingly, the first determining module 802 is configured to query the virtual linkage group information table that is established by the establishing module 804 for the information of the object of the virtual linkage group and determine the object of the virtual linkage group according to a query result.

Furthermore, referring to FIG. 10, the device further includes:
a second determining module 805, configured to determine a linkage policy of the virtual linkage group before the establishing module 804 establishes the virtual linkage group information table, where the linkage policy of the virtual linkage group at least includes a fault processing policy and an active-standby protection policy.

Accordingly, the virtual linkage group information table that is established by the establishing module 804 further includes the linkage policy of the virtual linkage group that is determined by the second determining module 805.

Specifically, the management module 803 is configured to query the virtual linkage group information table that is established by the establishing module 804 for the information of the object of the virtual linkage group; and perform, according to the management instruction that is received by the receiving module 801 and the queried linkage policy of the virtual linkage group, the unified management on the object of the virtual linkage group.

The second determining module 805 is configured to determine the linkage policy of the virtual linkage group according to a configuration of a user; or, when the user does not configure the linkage policy of the virtual linkage group, determine a default linkage policy to be the linkage policy of the virtual linkage group.

In the device provided in this embodiment, by grouping a virtual linkage group according to a service requirement, using a group of processes, a group of components, a group of boards, or a group of frames satisfying the service requirement as an object of the virtual linkage group, and taking the virtual linkage group as a unit to perform service management when a management instruction corresponding to the virtual linkage group is received, effective service management is performed on the basis of satisfying the service requirement, and the flexibility of the service management is improved.

It should be noted that, the method for service management according to the present invention is not limited to being used in a router, but may also be extended to be used in any one of systems that use a multiprocessing system management. The method provided in the present invention is applicable to multi-board or multi-node high end apparatus/server, or a truncked apparatus. In addition, while managing a service, the device for service management provided in the embodiments is merely described by taking the grouping of the functional modules for example. And in an actual application, the functions may be grouped to be implemented by different functional modules, that is, the internal structure of the device may be grouped into different functional modules to implement all or a part of the aforesaid functions. In addition, the method and device for service management provided in the embodiments are based on the same conception, where the detailed implementation processes are as described to in the method embodiments, and is not described in detail herein.

The sequence numbers of the embodiments are used merely for description, and do not represent a preference of the embodiments.

Part of the steps in the embodiments of the present invention may be implemented with software, and corresponding software programs may be stored in a readable storage medium such as an optical disk or a hard disk.

The above descriptions are merely exemplary embodiments of the present invention, but not intended to limit the present invention. Any modification, equivalent replacement, and improvement made without departing from the spirit and principle of the present invention shall fall within the scope of the present invention.

## Claims

1. A method for service management, comprising:
receiving a management instruction corresponding to a virtual linkage group, wherein the virtual linkage group is grouped according to a service requirement;
determining an object of the virtual linkage group, wherein the object of the virtual linkage group is a group of processes, a group of components, a group of boards, or a group of frames satisfying the service requirement; and
performing unified management on the object of the virtual linkage group according to the management instruction.

2. The method according to claim 1, before the receiving the management instruction corresponding to the virtual linkage group, further comprising:
establishing a virtual linkage group information table, wherein the virtual linkage group information table at least comprises information of the object of the virtual linkage group; and
accordingly, the determining the object of the virtual linkage group comprises:
querying the virtual linkage group information table for the information of the object of the virtual linkage group; and determining the object of the virtual linkage group according to a query result.

3. The method according to claim 2, before the establishing the virtual linkage group information table, further comprising:
determining a linkage policy of the virtual linkage group, wherein the linkage policy at least comprises a fault processing policy and an active-standby protection policy; and
accordingly, the virtual linkage group information table further comprises the linkage policy of the virtual linkage group.

4. The method according to claim 3, wherein the performing the unified management on the object of the virtual linkage group further according to the management instruction comprises:
querying the virtual linkage group information table for the information of the object of the virtual linkage group; and performing the unified management on the object of the virtual linkage group according to the management instruction and the queried linkage policy of the virtual linkage group.

5. The method according to claim 3, wherein the determining the linkage policy of the virtual linkage group further comprises:
determining the linkage policy of the virtual linkage group according to a configuration of a user; or, when the user does not configure a linkage policy of the virtual linkage group, determining a default linkage policy as the linkage policy of the virtual linkage group.

6. A device for service management, comprising:
a receiving module, configured to receive a management instruction corresponding to a virtual linkage group, wherein the virtual linkage group is grouped according to a service requirement;
a first determining module, configured to determine an object of the virtual linkage group, wherein the object of the virtual linkage group is a group of processes, a group of components, a group of boards, or a group of frames satisfying the service requirement; and
a management module, configured to perform, according to the management instruction received by the receiving module, unified management on the object of the virtual linkage group determined by the first determining module.

7. The device according to claim 6, further comprising:
an establishing module, configured to establish a virtual linkage group information table before the receiving module receives the management instruction corresponding to the virtual linkage group, wherein the virtual linkage group information table at least comprises information of the object of the virtual linkage group; and
accordingly, the first determining module is configured to query the virtual linkage group information table established by the establishing module for the information of the object of the virtual linkage group and determine the object of the virtual linkage group according to a query result.

8. The device according to claim 7, further comprising:
a second determining module, configured to determine a linkage policy of the virtual linkage group before the establishing module establishes the virtual linkage group information table, wherein the linkage policy of the virtual linkage group at least comprises a fault processing policy and an active-standby protection policy; and
accordingly, the virtual linkage group information table established by the establishing module further comprises the linkage policy of the virtual linkage group determined by the second determining module.

9. The device according to claim 8, wherein the management module is configured to query the virtual linkage group information table established by the establishing module for the information of the object of the virtual linkage group, and perform the unified management on the object of the virtual linkage group according to the management instruction received by the receiving module and the queried linkage policy of the virtual linkage group.

10. The device according to claim 8, wherein the second determining module is configured to determine the linkage policy of the virtual linkage group according to a configuration of a user; or, when the user does not configure a linkage policy of the virtual linkage group, determine a default linkage policy as the linkage policy of the virtual linkage group.
